# EUROPEAN PATENT SPECIFICATION

(11) **EP 2 397 948 B1**
(45) Date of publication and mention of the grant of the patent: **27.03.2013**
(21) Application number: 10006289.2
(22) Date of filing: 17.06.2010
(51) Int. Cl.: G06F 13/40

(54) **Electrical connector, system and use of an electrical connector**
Elektrischer Stecker, System und Verwendung eines elektrischen Steckers
Connecteur électrique, système et utilisation d'un connecteur électrique

(43) Date of publication of application: 21.12.2011
(73) Proprietor: Deutsche Telekom AG, 53113 Bonn (DE)
(72) Inventor: Sommer, Eberhard, 72116 Mössingen (DE); Dietrich, Kai, 64293 Darmstadt (DE)
(74) Representative: Schwöbel, Thilo K.

(56) References cited:
- WO-A1-01/08390
- DE-A1- 19 833 069
- US-A- 4 142 220
- US-A- 4 633 359
- US-A1- 2006 215 343
- www.etsi.org: "Access and Terminals; Study for the specification of the low pass section of POTS/ADSL splitters", 31 December 2000 (2000-12-31), ETSI, XP002600156, * page 29 - page 29 *

## Description

The present invention relates to an electrical connector for providing data communication between a local networking device and a telephone network, a system comprising an electrical connector and the use of an electrical connector for Digital Subscriber Line applications.

It is common knowledge that in broadband applications, e.g. Digital Subscriber Line applications, local networking devices, so called home gateways, are connected to wide area networks (WAN), e.g. telephone networks by using electrical connector cables.

Suchlike electrical connector cables are designed very simple. Usually, they comprise a cable with at least two wires, wherein each free end of the cable is provided with a plug connector. One of these plug connectors is configured to be connected to a corresponding socket of the home gateway, whereas the other of these plug connectors is configured to be connected to a telephone socket which is connected to a subscriber line of the telephone network.

It is common knowledge, e.g. from document ETSI TR 101 728 V1.1.1 (2000-12), that the local networking devices are provided with galvanic signatures for maintenance purposes. The galvanic signatures are provided by galvanic signature circuits which are permanently integrated into the local network devices. When a local networking device is connected via the commonly known electrical connector to the telephone network, the operator of the telephone network is able to measure the galvanic signature and verifies that the local networking device is enabled and that the transmission line works. For this purpose, the operator directly detects the capacity of the galvanic signature circuit, as well as the break voltage of Zener diodes which are provided by the galvanic signature circuit. Therefore, the usage of a DSL-Splitter is not necessary.

WO01/08390 discloses a home network connecting devices providing a galvanic signature circuit where two Zener diodes are connected in an opposite manner.

Furthermore, it is known from the prior art to integrate a surge arrestor into the local networking device in order to protect the integrated circuits of the local networking device against overvoltage applied on the subscriber line and on the electrical connector cable.

US-4142220 discloses a home network connecting devices providing a surge arrester.

The above described conception however is disadvantageous, because if the galvanic signature should be changed the whole local networking device, e.g. the DSL modem or the DSL router, has to be replaced which is very expensive and causes high installation efforts. Same applies when the galvanic signature circuit gets broken, due to fuse blowing in the Zener diodes, for instance. Furthermore, the whole local networking device has to be replaced when the surge arrestor gets broken e.g. during discharging a surge voltage.

### SUMMARY

Is it an object of the present invention to provide an electrical connector through which the local networking device becomes independent from a certain galvanic signature and/or from the surge arrestor. Furthermore it is an object of the present invention to provide an electrical connector which allows a cost-effective and easy installable modification of the galvanic signature and/or which allows a cost-effective and easy installable replacement of the surge arrestor.

The object of the present invention is achieved by an electrical connector for providing data communication between a local networking device and a telephone network as defined by claim 1.

It is herewith advantageous that the galvanic signature of the galvanic signature circuit is assigned to the electrical connector and not to the local networking device. If the galvanic signature should be changed only the comparatively cheap electrical connector has to be replaced instead of replacing the whole expensive local networking device. Consequently, hardware costs and installation effort can be saved. It is an advantage of the present invention that implementing the galvanic signature circuit into the electrical connector enables an exclusively splitter-free connected Home Gateway to be identified as a line termination in electronic line check. Using the galvanic signature, it can be determined whether the Home Gateway is connected with the subscriber line or whether there is a line interruption. In particular, the electrical connector is a connection cable for Digital Subscriber Line applications.

The surge arrestor is provided within the electrical connector and not in the local networking device. If there is an overvoltage on the subscriber line, the overvoltage is discharged by the surge arrestor of the electrical connector already in the area of the electrical connector and does not even reach the local networking device. Therefore, protection of the local networking device increases. If the surge arrestor should be burned by the overvoltage, the electrical connector can easily and cost-efficiently be replaced without any installation efforts. The surge arrestor preferably comprises a Gas-Discharge-Tube. In particular, the electrical connector is a connection cable for Digital Subscriber Line applications.

According to a preferred embodiment of the present invention, the first connector comprises plug-in telecommunication connection unit for connecting the electrical connector to a subscriber line of the telephone network. The telecommunication connection preferably comprises a TAE male connector. It is thereby advantageously possible that the electrical connector is easily pluggable into standard TAE sockets.

According to another preferred embodiment of the present invention, the second connector comprises a RJ45 male connector. Advantageously, the second connector is pluggable directly into a RJ45 socket of the local networking device. Alternatively, the second connector comprises a RJ45 female connector, so that the RJ45 male connector of a standard data cable e.g. included in delivery of the local networking device, is pluggable directly into the second connector. In particular, the RJ45 female connector is hereby integrated in a housing of the plug-in telecommunication connection unit.

The local networking device preferably comprises a residential gateway and particularly preferably a DSL router, a DSL modem, a personal computer and/or the like. According to the present invention, it is thereby advantageously possible that the residential gateway is independent from the galvanic signature and/or from the surge arrestor. So, a certain residential gateway is usable with changing galvanic signatures, wherein the actual galvanic signature only depends on the currently used electrical connector.

According to the present invention, the electrical connector comprises a transmission cable having at least two wires provided between the first and the second connector, wherein the galvanic signature circuit comprises two Zener diodes provided in series between the two wires of the transmission cable in such a manner, that the pass direction of the two Zener diodes are opposite to each other. Preferably the two Zener diodes are connected in parallel with a first capacitor and/or wherein the two Zener diodes are connected in series with a second capacitor and/or with an ohmic resistor. If one of these components, e.g. the Zener diodes becomes broken, only the electrical connector has to be replaced and not the expensive local networking device. In particular, also the Gas-Discharge-Tube is connected to each of the two wires of the cable.

Preferably, the galvanic signature and/or the surge arrestor are integrated into the telecommunication connection unit and preferably into the TAE connector, because in the TAE connector is enough installation space to accommodate the above mentioned components.

Another object of the present invention is a system for providing Digital Subscriber Line applications comprising a local networking device, a telephone network and an electrical connector according to the present invention, wherein the electrical connector is configured to provide data transmission between the local networking device and the telephone network for the Digital Subscriber Line applications. According to the present invention, it is thereby advantageously possible that the local networking device is independent of the galvanic signature and of the surge arrestor. If the galvanic signature should be modified or if the galvanic signature circuit or the surge arrestor gets broken, only the comparatively cheap electrical connector and not the comparatively expensive local networking device must be replaced.

Another object of the present invention is the use of an electrical connector according to the present invention as a connection cable between a local networking device and a telephone network for Digital Subscriber Line applications.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a system comprising an electrical connector according to an exemplary embodiment of the present invention.

Figure 2 schematically illustrates in detail the electrical connector according to the exemplary embodiment of the present invention.

Figure 3 schematically illustrates in detail the TAE male connector of the electrical connector according to the exemplary embodiment of the present invention. Both male connector design of the TAE plug 4 could be possible 50 or 4.

### DETAILED DESCRIPTION

The present invention will be described with respect to a particular embodiment and with reference to a certain drawing but the invention is not limited thereto but only by the claims. The drawing described is only schematic and is nonlimiting. In the drawing, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

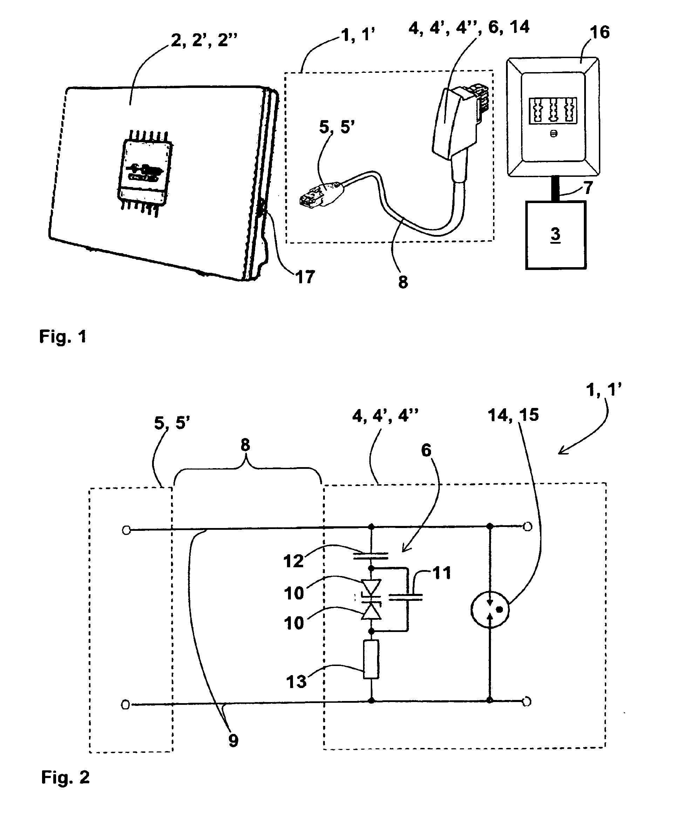

Figure 1 schematically shows a system for providing Digital Subscriber Line (DSL) applications. The system comprises a local networking device 2, a telephone network 3 and an electrical connector 1 connecting the locale networking device 2 with the telephone network 3. The local networking device 2 is a residential gateway 2', also referred to as Home Gateway, in the form of a DSL router 2". The DSL router 2" is e.g. connected to a local network (LAN), in particular to a wireless network (WLAN). The telephone network 3 is a wide area network (WAN) providing a subscriber line 7 which is connectable via a TAE socket 16. The electrical connector 1 is a connection cable 1' especially for Digital Subscriber Line (DSL) applications providing Broadband data communication between the DSL router 2" and the subscriber line 7. The connection cable 1' comprises a plug-in telecommunication unit 4' as a first connector 4. The plug-in telecommunication unit 4' is provided as a TAE male connector 4" pluggable into a TAE socket 16 connected to the subscriber line 7. The connection cable 1' furthermore comprises a second connector 5 in the form of a RJ45 male connector 5' pluggable into a corresponding RJ45 female connector 17 of the DSL router 2". The connection cable 1' is provided with a galvanic signature circuit 6 and with a surge arrestor 14. Both, the galvanic signature circuit 6 and the surge arrestor 14 are integrated into a housing of the plug-in telecommunication unit 4' which is described in more detail below referring to figure 2. When the connection cable 1' is connected on the one hand to the TAE socket 16 and on the other hand to the RJ45 female connector 17, the operator of the telephone network 3 is capable of measuring the galvanic signature circuit 6 and consequently to verify if the connection cable 1' is connected to the subscriber line 7 and that the transmission line between the connection cable 1' and the telephone network 3 is not interrupted. For this purpose, the operator directly detects the capacity of the galvanic signature circuit 6, as well as the break voltage of Zener diodes 10 which are integrated into the galvanic signature circuit 6. In this way, troubleshooting on Digital Subscriber Lines by means of galvanic measurements is possible without using a DSL-Splitter, even when the DSL router 2" itself does not comprise a galvanic signature. The implementation of the galvanic signature circuit 6 in the electrical connector 1 provides splitter-free test and maintenance procedures.
The DSL-router 2" can be detected as a line termination in electronic line checks provided that it is connected via the connection cable 1'. The surge arrestor 14 comprises a Gas-Discharge-Tube 15 in order to protect the integrated circuits inside of the DSL router 2" against overvoltage on the subscriber line 7. In case a further resistibility protection is implemented into the local networking device, the surge arrestor 14 and the further resistibility protection have to be synchronized to each other. Optionally, the electrical connector 1 is provided with shielding means. The first and/or the second connector 4, 5 particularly comprise suitable anti-kink sleeve.

Figure 2 schematically illustrates in detail the electrical connector 1 according to the exemplary embodiment of the present invention, so that the electrical connector 1 illustrated in the circuit diagram of figure 2 is substantially similar to the electrical connector 1 shown in figure 1. The connection cable 1' comprises at least two wires 9. One free end of the connection cable 1' comprises the first connector 4 and the other free end of the connection cable 1' comprises the second connector 5. In between, the first and the second connector 4, 5 are connected to each other via a transmission cable 8. The galvanic signature circuit 6 comprises two Zener diodes 10 provided in series between the two wires 9 in such a manner that the pass directions of the Zener diodes 10 are directed opposite to each other. The galvanic signature circuit furthermore comprises a second capacitor 12 provided in series between one of the two wires 9 and one of the Zener diodes 10 and an ohmic resistor 13 provided in series between the other of the two wires 9 and the other of the two Zener diodes 10. Furthermore, a first capacitor 11 is connected in parallel with the two Zener diodes 10. The surge arrestor 14 comprises the Gas-Discharge-Tube 15 (GDT) provided between the two wires 9 and connected to each of the two wires 9. The Gas-Discharge-Tube 15 is adjusted to prevent the Gas-Discharge-Tube 15 to be self-oscillating and self-damaging of the local networking device 2 in case of surge or other high voltage influences. Preferably, the first capacitor 11 comprises an electrical capacity of 470 nF, the second capacitor 12 an electrical capacity of 150 pF and the ohmic resistor 13 an electrical resistance of 100K ohm.

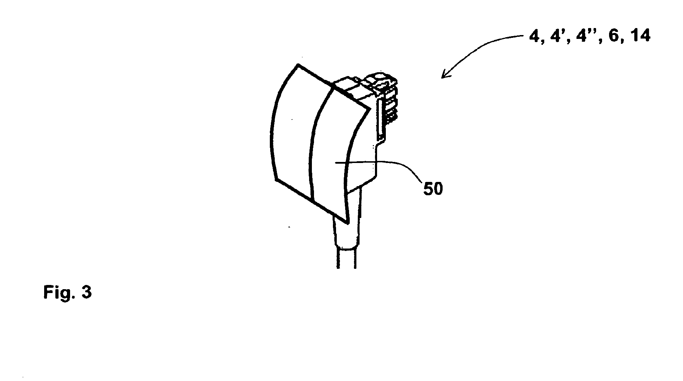

Figure 3 schematically illustrates in detail the TAE male connector 4" of the electrical connector 1. The housing of the TAE male connector 4" consists of two housing shells accommodating the galvanic signature circuit 6 and the surge arrestor 14. The appropriate components are secured using a suitable circuit board. Preferably, both housing shells of the TAE connector should be glued in technical production to protect the entire connector body from manipulation and make it secure for servicing and customers. To secure the connecting cable, a suitable anti-kink sleeve is to be provided at the transition to the transmission cable 8. The housing of the TAE male connector 4" has an expanded tail 50 compared to standard TAE connectors, to prevent the using of both N slots of the first TAE. The expanded tail 50 preferably comprises a width of about 19 Millimetres, a length of about 37 Millimetres and a thickness of about 2 Millimetres.

## Claims

1. Electrical connector (1) for providing data communication between a local networking device (2) and a telephone network (3), wherein the electrical connector (1) comprises a first connector (4) for connecting the electrical connector (1) to the telephone network (3) and wherein the electrical connector (1) comprises a second connector (5) for connecting the electrical connector (1) to the local networking device (2) and comprising a galvanic signature circuit, **characterized in that**
the electrical connector (1) further comprises a surge arrestor (14), wherein the electrical connector (1) comprises a transmission cable (8) having at least two wires (9) provided between the first and the second connector (4, 5), wherein the galvanic signature circuit (6) comprises two Zener diodes (10) provided in series between the two wires (9) of the transmission cable (8) in such a manner, that the pass direction of the two Zener diodes (10) are opposite to each other, wherein the first connector (4) comprises a plug-in telecommunication connection unit (4') for connecting the electrical connector (1) to a subscriber line (7) of the telephone network (3), wherein the galvanic signature circuit (6) and the surge arrestor (14) are integrated into a housing of the telecommunication connection unit (4').

2. Electrical connector (1) according to claim 1, wherein the telecommunication connection unit (4') comprises a TAE male connector (4"), wherein the galvanic signature circuit (6) and/or the surge arrestor (14) are integrated into a housing of the TAE connector (4") and wherein a housing of the TAE male connector (4") preferably comprises an expanded tail (50).

3. Electrical connector (1) according to claims 1 or 2, wherein the second connector (5) comprises a RJ45 male connector (5') and/or a RJ45 female connector.

4. Electrical connector (1) according to claims 1 or 2, wherein the local networking device (2) comprises a residential gateway (2') and preferably a DSL router (2"), a DSL modem, a personal computer and/or the like.

5. Electrical connector (1) according to one of the preceding claims, wherein the two Zener diodes (10) are connected in parallel with a first capacitor (11) and/or wherein the two Zener diodes (10) are connected in series with a second capacitor (12) and/or with an ohmic resistor (13).

6. Electrical connector (1) according to one of the preceding claims, wherein the surge arrestor comprises a Gas-Discharge-Tube (15).

7. Electrical connector (1) according to claim 6, wherein the Gas-Discharge-Tube (15) is connected to each of the two wires (9) of the cable (8).

8. Electrical connector (1) according to one of claims 1 or 2, wherein the electrical connector (1) is a connection cable (1') for Digital Subscriber Line (DSL) applications.

9. System for providing Digital Subscriber Line (DSL) applications comprising a local networking device (2), a telephone network (3) and an electrical connector according to one of the preceding claims, wherein the electrical connector is configured to provide data transmission between the local networking device (2) and the telephone network (3) for the Digital Subscriber Line applications.

10. Use of an electrical connector (1) according to one of claims 1 to 8 as a connection cable (1') between a local networking device (2) and a telephone network (3) for Digital Subscriber Line (DSL) applications.

## Patentansprüche

1. Elektrisches Verbindungselement (1) zum Bereitstellen einer Datenkommunikation zwischen einer lokalen Netzvorrichtung (2) und einem Telefonnetz (3), wobei das elektrische Verbindungselement (1) ein erstes Verbindungselement (4) zum Verbinden des elektrischen Verbindungselements (1) mit dem Telefonnetz (3) umfasst und wobei das elektrische Verbindungselement (1) ein zweites Verbindungselement (5) zum Verbinden des elektrischen Verbindungselements (1) mit der lokalen Netzvorrichtung (2) und eine galvanische Signaturschaltung umfasst, **dadurch gekennzeichnet, dass**
das elektrische Verbindungselement (1) ferner einen Überspannungsschutz (14) umfasst, wobei das elektrische Verbindungselement (1) ein Übertragungskabel (8) umfasst, das wenigstens zwei Drähte (9) aufweist, die zwischen dem ersten und dem zweiten Verbindungselement (4, 5) vorgesehen sind, wobei die galvanische Signaturschaltung (6) zwei Zenerdioden (10) umfasst, die in Reihe zwischen den beiden Drähten (9) des Übertragungskabels (8) auf eine Weise vorgesehen sind, dass die Durchlassrichtungen der beiden Zenerdioden (10) einander entgegengesetzt sind, wobei das erste Verbindungselement (4) eine Telekommunikationssteckverbindungseinheit (4') zum Verbinden des elektrischen Verbindungselements (1) mit einer Teilnehmerleitung (7) des Telefonnetzes (3) umfasst, wobei die galvanische Signaturschaltung (6) und der Überspannungsschutz (14) in ein Gehäuse der Telekommunikationsverbindungseinheit (4') integriert sind.

2. Elektrisches Verbindungselement (1) nach Anspruch 1, wobei die Telekommunikationsverbindungseinheit (4') einen TAE-Stecker (4") umfasst, wobei die galvanische Signaturschaltung (6) und/oder der Überspannungsschutz (14) in ein Gehäuse des TAE-Steckers (4") integriert sind und wobei ein Gehäuse des TAE-Steckers (4") vorzugsweise ein vergrößertes Endstück (50) umfasst.

3. Elektrisches Verbindungselement (1) nach Anspruch 1 oder 2, wobei das zweite Verbindungselement (5) einen RJ45-Stecker (5') und/oder eine RJ45-Buchse umfasst.

4. Elektrisches Verbindungselement (1) nach Anspruch 1 oder 2, wobei die lokale Netzvorrichtung (2) einen wohnungsbezogenen Netzübergang (2') und vorzugsweise einen DSL-Router (2"), ein DSL-Modem, einen Personal Computer und/oder Ähnliches umfasst.

5. Elektrisches Verbindungselement (1) nach einem der vorhergehenden Ansprüche, wobei die beiden Zenerdioden (10) parallel zu einem ersten Kondensator (11) geschaltet sind und/oder wobei die beiden Zenerdioden (10) in Reihe mit einem zweiten Kondensator (12) und/oder mit einem Ohmschen Widerstand (13) geschaltet sind.

6. Elektrisches Verbindungselement (1) nach einem der vorhergehenden Ansprüche, wobei der Überspannungsschutz eine Gasentladungsröhre (15) umfasst.

7. Elektrisches Verbindungselement (1) nach Anspruch 6, wobei die Gasentladungsröhre (15) mit jedem der beiden Drähte (9) des Kabels (8) verbunden ist.

8. Elektrisches Verbindungselement (1) nach einem der Ansprüche 1 oder 2, wobei das elektrische Verbindungselement (1) ein Verbindungskabel (1') für Anwendungen einer digitalen Teilnehmerleitung (DSL-Anwendungen) ist.

9. System zum Bereitstellen von Anwendungen einer digitalen Teilnehmerleitung (DSL-Anwendungen), das eine lokale Netzvorrichtung (2), ein Telefonnetz (3) und ein elektrisches Verbindungselement nach einem der vorhergehenden Ansprüche umfasst, wobei das elektrische Verbindungselement konfiguriert ist, um Datenübertragung zwischen der lokalen Netzvorrichtung (2) und dem Telefonnetz (3) für die Anwendungen einer digitalen Teilnehmerleitung zur Verfügung zu stellen.

10. Verwendung eines elektrischen Verbindungselements (1) nach einem der Ansprüche 1 bis 8 als ein Verbindungskabel (1') zwischen einer lokalen Netzvorrichtung (2) und einem Telefonnetz (3) für Anwendungen einer digitalen Teilnehmerleitung (DSL-Anwendungen).

## Revendications

1. Connecteur électrique (1) pour fournir une communication de données entre un dispositif de réseautage local (2) et un réseau téléphonique (3), ce connecteur électrique (1) comprenant un premier connecteur (4) pour connecter le connecteur électrique (1) au réseau téléphonique (3) et ce connecteur électrique (1) comprenant un deuxième connecteur (5) pour connecter le connecteur électrique (1) au dispositif de réseautage local (2) et comprenant un circuit de signature galvanique, **caractérisé en ce que** le connecteur électrique (1) comprend en outre un suppresseur de surtension (14), le connecteur électrique (1) comprenant un câble de transmission (8) ayant au moins deux fils (9) prévus entre le premier et le deuxième connecteur (4, 5), dans lequel le circuit de signature galvanique (6) comprend deux diodes Zener (10) prévues en série entre les deux fils (9) du câble de transmission (8) de manière à ce que les sens de passage des deux diodes Zener (10) soient opposés l'un à l'autre, dans lequel le premier connecteur (4) comprend une unité de connexion de télécommunication enfichable (4') pour connecter le connecteur électrique (1) à une ligne d'abonné (7) du réseau téléphonique (3), dans lequel le circuit de signature galvanique (6) et le suppresseur de surtension (14) sont intégrés dans un boîtier de l'unité de connexion de télécommunication (4').

2. Connecteur électrique (1) selon la revendication 1, dans lequel l'unité de connexion de télécommunication (4') comprend un connecteur mâle TAE (4"), dans lequel le circuit de signature galvanique (6) et/ou le suppresseur de surtension (14) sont intégrés dans un boîtier du connecteur TAE (4") et dans lequel un boîtier du connecteur mâle TAE (4") comporte de préférence une queue agrandie (50).

3. Connecteur électrique (1) selon les revendications 1 ou 2, dans lequel le deuxième connecteur (5) comprend un connecteur mâle RJ45 (5') et/ou un connecteur femelle RJ45.

4. Connecteur électrique (1) selon les revendications 1 ou 2, dans lequel le dispositif de réseautage local (2) comprend une passerelle résidentielle (2') et de préférence un routeur DSL (2"), un modem DSL, un ordinateur personnel et/ou un appareil similaire.

5. Connecteur électrique (1) selon l'une des revendications précédentes, dans lequel les deux diodes Zener (10) sont connectées en parallèle avec un premier condensateur (11) et/ou dans lequel les deux diodes Zener (10) sont connectées en série avec un deuxième condensateur (12) et/ou avec une résistance ohmique (13).

6. Connecteur électrique (1) selon l'une des revendications précédentes, dans lequel le suppresseur de surtension comprend un parafoudre à gaz (15).

7. Connecteur électrique (1) selon la revendication 6, dans lequel le parafoudre à gaz (15) est connecté à chacun des deux fils (9) du câble (8).

8. Connecteur électrique (1) selon l'une des revendications 1 ou 2, ce connecteur électrique (1) étant un câble de connexion (1') pour des applications DSL (ligne d'abonné numérique).

9. Système pour fournir des applications DSL (ligne d'abonné numérique) comprenant un dispositif de réseautage local (2), un réseau téléphonique (3) et un connecteur électrique selon l'une des revendications précédentes, dans lequel le connecteur électrique est configuré de façon à fournir une transmission de données entre le dispositif de réseautage local (2) et le réseau téléphonique (3) pour les applications DSL.

10. Utilisation d'un connecteur électrique (1) selon l'une des revendications 1 à 8 comme câble de connexion (1') entre un dispositif de réseautage local (2) et un réseau téléphonique (3) pour des applications DSL.
